# EUROPEAN PATENT APPLICATION

(11) **EP 1 008 560 A1**
(43) Date of publication of application: **14.06.2000**
(21) Application number: 99309819.3
(22) Date of filing: 07.12.1999
(51) Int. Cl.: C02F 3/30, C02F 1/36

(54) **Biological removal of phosphorus from waste water**

(30) Priority: 09.12.1998 GB 9827150
(71) Applicant: AW Creative Technologies Limited, Huntingdon, Cambridgeshire PE18 6NZ (GB)
(72) Inventor: Strickland, Jonathan Edward Tully, Milton, Cambridge CB4 6EB (GB)
(74) Representative: Perry, Robert Edward

(57) **Abstract**

A process for the biological removal of phosphorus from waste water, comprises the steps of treating the waste water in an anaerobic zone and then in an aerobic zone, allowing the treated waste water to settle in a settlement zone, and passing the resultant activated sludge to the anaerobic zone; some or all of the sludge is treated to release intracellular carbon, e.g. using ultrasound, and the sludge is denitrified.

Suitable water treatment apparatus comprises, in sequence, an anaerobic zone (1), an aerobic zone (3), and a settlement zone (4), means for passing, activated sludge from the settlement zone to the anaerobic zone, and means (5), e.g. a source of ultrasound, for treating the activated sludge to release intracellular carbon.

## Description

### Field of the Invention

This invention relates to the treatment of waste water, and in particular to the biological removal of phosphorus from waste water.

### Background of the Invention

Biological phosphorus removal processes are well known in the art and have been applied to activated sludge plants. Currently, such plants always include an anaerobic zone wherein waste water is mixed with activated sludge. The biochemical reactions that occur in this zone are critical to the operation of the process.

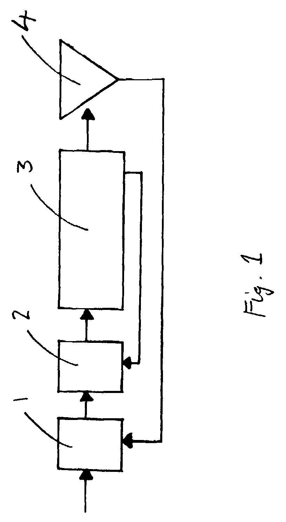

Where these plants are required to convert ammonia to a nitrate, the denitrifying bacteria (those which convert nitrate to nitrogen) compete for available carbon with phosphorus-accumulating bacteria in the anaerobic zone. In order to stop this occurring, plants are designed with anoxic zones and large internal recycles to remove nitrate. An example of this process is the Bardenpho process; this is illustrated schematically in Fig. 1, which shows an anaerobic zone 1, an anoxic zone 2, an aerobic zone 3 (with recycle to the anoxic zone) and a settlement zone 4 (with a sludge return line to the anaerobic zone).

In the Bardenpho process, the aerobic recycle does not return all the nitrate to the anoxic zone to be denitrified. Therefore, an amount of nitrate will enter the settlement zone and subsequently be recycled to the anaerobic zone. In order to minimise the amount of nitrate entering the settlement zone, and hence the anaerobic zone, large recycle ratios are utilised, such as three times the incoming flow.

Ma and Lin, Water Sci. Tech. 38(6):253-260 (1998), investigated ultrasound as a means for degrading organic compounds, such as humic acids. The greater the sonication time, the greater the increase in BOD.

### Summary of the Invention

The present invention provides an improved process for the biological removal of phosphorus from waste water, comprising the steps of treating return activated sludge (RAS) to release intracellular carbon and denitrifying the RAS prior to its entry into the anaerobic zone. Preferably, this treatment comprises the use of ultrasound.

Apparatus according to the invention comprises, in sequence, an anaerobic zone, an aerobic zone, and a settlement zone, means for passing activated sludge from the settlement zone and the anaerobic zone, and means for treating the activated sludge to release intracellular carbon.

Biological phosphorus removal can be carried out, according to the invention, using conventional plant. However, the necessary apparatus is simpler and less expensive than that required in conventional biological treatment designs. Minimal anoxic volume is required, because the denitrification rate is increased, and the biomass concentration in the anoxic zone is double that of a conventional plant.

### Description of the Invention

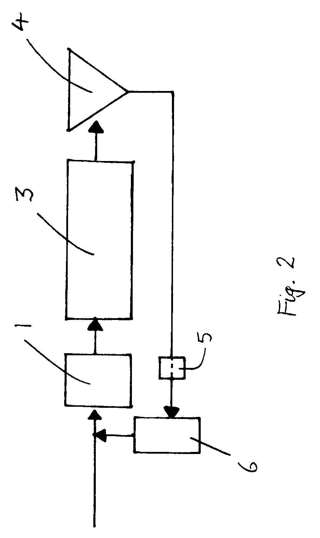

The invention is described by way of example only, with reference to Figure 2. Fig. 2 shows (like Fig. 1) anaerobic, aerobic and settlement zones 1, 3 and 4. There is also a line for the return of activated sludge; unlike the apparatus shown in Fig. 1, this return line includes an ultrasound source 5 and an anoxic zone 6. As illustrated below, ultrasound may be applied more than once.

The use of such apparatus eliminates the need for an aerobic recycle. Instead, the return activated sludge (RAS) undergoes treatment, e.g. using ultrasound, whereby bacterial cells are ruptured, to release intracellular contents which act as a carbon source. This carbon source enables denitrifying bacteria to denitrify the RAS prior to its entry into the anaerobic zone. In the anaerobic zone, phosphorus-accumulating bacteria may remove phosphorus without competition for available carbon from the denitrifying bacteria. The pre-anaerobic zone may therefore be equated with the anoxic zone of conventional systems.

The released carbon may result in relatively high denitrification rates, e.g. 3-5 mgN/gMLSS/hr. Therefore, and since the RAS contains approximately twice the concentration of suspended solids as the mixed liquor, the pre-anaerobic zone may be less than half the size of the anoxic zones conventionally provided.

Furthermore, this process is easy and economical to add to existing plants, as alterations can be limited to installation of a small ultrasound generator and an in-line horn, and a small, pre-anaerobic tank. The ongoing energy costs of the large recycle line in existing plants are avoided, as are the high installation costs of a large pipeline and pump. Finally, in a process of the present invention, sludge can proceed in a plug flow path through the aeration plant, improving the settling properties as compared to plants with a high level of recycle.

"Ultrasound" is the term used to describe sound energy, typically at frequencies above 20kHz, above the range normally audible to human beings. High power ultrasound is usually generated by a transducer (which converts mechanical or electrical energy into high frequency vibrations) and is delivered into a fluid via a horn or probe.

Cavitation, i.e. the formation, growth and collapse through implosion of (usually vapour-filled) micro-bubbles, can occur if the ultrasonic energy applied to a fluid exceeds the molecular attractive forces. The bubble implosions produce short-lived (lasting micro-seconds) "hot spots" in the liquid which can release sufficient energy to drive a variety of chemical reactions, and disrupt bacterial cells. The cavitation effect is influenced by a number of factors, including the liquid temperature (it is more likely to occur at higher temperatures); viscosity and surface tension; ultrasonic intensity (often referred to as acoustic energy intensity); and the duration and frequency of ultrasonic vibration (e.g. at 20 or 35 kHz).

Cavitation will occur only if the ultrasonic energy applied to a fluid exceeds the molecular alternative forces. The minimum amount of energy required to initiate cavitation is referred to as the "cavitation threshold". This threshold will vary for different fluids. Only the energy applied above the threshold will contribute to the formation of a cavitation bubble. For example, in water, cavitation will generally occur once the ultrasonic energy rises above 1 W/cm²; see Mason, "Advances in Sonochemistry", vol. 2, Jai Press Ltd., Greenwich (1991).

An ultrasound stack suitable for use in the invention typically comprises a generator; a transducer (which contains the vibrating crystals); a booster (which amplifies the vibrations); a horn; and optionally, an extender (enables the horn to be positioned in the fluid away from the transducer). It is the horn which is immersed in the fluid and from which the ultrasonic energy is emitted. The ultrasound equipment may be designed to operate at a specific frequency, e.g. close to 20 kHz.

A suitable horn is essentially toroidal. Since the horn vibrates along its radial axis, this design enables very high levels of sonication energy to be achieved in the centre of the horn. This should enable a significant reduction in the time required to process a given quantity of wastewater. It should also ensure that the applied ultrasonic intensities are maximised (i.e. above the cavitation threshold for the fluid in question). This is because the cavitation zone (i.e. the zone around the horn in which the sonication levels are sufficient to cause cavitation) is highly focussed.

The sonication retention time (sHRT) is the time period that the fluid spends in the "cavitation zone". The cavitation zone is defined as the area around the ultrasonic device in which the ultrasonic intensities are sufficient to break up cellular matter in the waste water, be that either directly due to the cavitation bubbles or from the associated jet-streaming effects. This is a critical parameter since, the longer the required sHRT, the greater the costs will be for scaled-up ultrasound plant. Routine experiment may be appropriate, in order to identify the optimum sHRT. Variations in the sHRT may be achieved by, for example, modulation of the pump speed or control of the number of times the fluid passes the horn. This latter mode of operation may simulate a fast pass by the horn but a long HRT, achieved through recycle.

The following Example illustrates the invention.

### Example

A generator (FRDX G3k 1459) was used with an aluminium horn (126 mm OD, 50 mm ID, 50 mm wide). The operating frequency settled at 19.715 kHz in air. This frequency should be the same when immersed in water or sludge. This is the design frequency at which the horn resonates, i.e. it is the frequency at which there is the optimum conversion of crystal vibration energy into sustainable ultrasound energy.

Following initial experiments, conducted to determine the feasibility of the process, more detailed experiments were undertaken to investigate whether the COD released on sonication was easily assimilable by the bacteria. If this was not the case, i.e. the soluble COD released on sonication was recalcitrant rather than biodegradable, then it could be concluded early in the work that the sonication would have minimal (or even a detrimental) effect on the ASP process.

The parameters recorded included: the temperature of treated and untreated sludge; the soluble COD, mg/l; the denitrification rate, mgNO₃-N/gMLSS.h where MLSS is the solids in the RAS and not in the aeration tank mixed liquor; and the energy consumed per litre of sludge being treated, kJ/l.

The sonication retention times varied from 0 to 16 seconds with the maximum number of passes being 16 (S₁₆). The flow rate was also varied, between 0.066 and 0.40 1/s.

In this experiment, the availability of the soluble COD to the bacteria in the RAS mixed liquor was confirmed by checking the denitrification rate, which (in theory) should increase as more COD is made available. This was done by checking the concentration of nitrate in a sample of mixed liquor, at regular intervals over a period of 1-3 hours. The rate of denitrification is affected by the following variables: temperature (particularly important since sonication warms the fluid); dissolved oxygen; biomass concentration in RAS; and type of COD available.

The sonicated samples had an average temperature rise of between 1-2°C per second of retention time in the cavitation zone. It was recognised that this temperature rise would have a considerable effect on the respiration rate of the bacteria (and thus affect the denitrification rates). In order to make a useful comparison between sonicated and unsonicated samples, it was important to keep the temperature of the samples similar. This was achieved by refrigerating all samples immediately after they were produced. This cooled them to a similar temperature (of around 10-13°C) prior to the denitrification rate determination.

Table 1 shows the concentration of soluble COD (in mg/l) at various sHRTs, and at a flow rate of 0.18 l/s.

**Table 1**

| sHRT | COD (50% amp) | COD (60% amp) | COD (75% amp) |
|---|---|---|---|
| 0s | 39 | 27.2 | 24.9 |
| 2s | 112 | 250 | 213 |
| 4s | 130 | 283 | 259 |
| 8s | 150 | 344 | 344 |

After 2s of sonication at 60 and 75% amplitudes, the COD concentration increased by 850-900%. After 8s of sonication at 60 and 75% amplitudes, the COD concentration increased by 1200-1300%.

Table 2 shows the difference in percentage increase of soluble COD at 75% amplitude at different flow rates.

**Table 2**

| Flow rate | 0.066 l/s | 0.18 l/s |
|---|---|---|
| Number of passes over horn | 1 | 3 |
| Soluble COD, mg/l, at sHRT 0s | 31.7 | 24.9 |
| Soluble COD, mg/l, at 5.5s sHRT | 196 | - |
| Soluble COD, mg/l, at 6s sHRT | - | 308 |
| % increase in COD | 618 | 1237 |

The results in Table 2 show that, for the 150mm flow cell with a sHRT of 5.5 seconds, an increase in soluble COD of 618% was observed at 75% amplitude. This result was achieved from a single pass by the horn (i.e. slow flow in the pump). This result can be compared with a similar retention time of 6s, at a higher flow rate but with multiple passes (3 in this case).

From Table 2, it can be seen also that the increase in sCOD was significantly greater with the multiple pass option (giving an increase of sCOD of 1237%). It is unlikely that such a large increase in performance was due to the extra 0.5s sonication retention time (6 seconds as opposed to 5.5). It was not anticipated that there would be any significant difference between single and multiple passes, and thus this result is unexpected.

From a practical point of view, multiple passes may be very desirable. This is because most large-scale flow systems will have a minimum flow rate below which settlement problems occur.

It is widely accepted that the formation of cavitation bubbles in water takes 7-20 acoustic cycles. At a frequency of 20kHz, this is approximately 0.001s. Assuming that the time for cavitation to occur in sludge is similar to that for water, it can be assumed that 1 msec is the minimum time the sludge must spend within the cavitation zone.

Table 3 shows the denitrification rates for sonicated and unsonicated sludges at different retention times and different generator amplitudes. The denitrification rate is measured as mg NO₃-N/gMLSS.h.

**Table 3**

| sHRT | Denitrification (50% amp) | Denitrification (60% amp) |
|---|---|---|
| Os | 0.34 | 0.18 |
| 2s | 0.49 | 0.57 |
| 4s | 0.5 | 0.59 |
| 8s | 0.55 | 0.79 |

From Table 3, it can be concluded that the denitrification rate increased with increasing sonication time at 50 and 60% amplitude.

## Claims

1. A process for the treatment of waste water, comprising passing the waste water through an anaerobic zone, an aerobic zone, and a settlement zone, and passing the resultant activated sludge to the anaerobic zone, characterised by treating some or all of the sludge to release intracellular carbon, and denitrifying the sludge.

2. A process according to claim 1, wherein the waste water and the sludge undergo plug flow.

3. A process according to claim 1 or claim 2, wherein the treatment to release intracellular carbon comprises the application of ultrasound.

4. A process according to claim 3, wherein ultrasound is applied more than once.

5. A process according to claim 1, substantially as herein described with reference to Figure 2 of the accompanying drawings.

6. Water treatment apparatus comprising, in sequence, an anaerobic zone, an aerobic zone, and a settlement zone, means for passing activated sludge from the settlement zone and the anaerobic zone *via* a denitrification zone, and means for treating the activated sludge to release intracellular carbon.

7. Apparatus according to claim 6, wherein the treatment means comprises an ultrasound source.

8. Apparatus according to claim 7, which comprises more than one ultrasound source.

9. Apparatus according to claim 6, substantially as herein described with reference to Figure 2 of the accompanying drawings.
